# EUROPÄISCHE PATENTANMELDUNG

(11) **EP 3 182 231 A2**
(43) Veröffentlichungstag der Anmeldung: **21.06.2017**
(21) Anmeldenummer: 16176553.2
(22) Anmeldetag: 28.06.2016
(51) Int. Cl.: G05B 15/02

(54) **VERFAHREN ZUM BETRIEB EINES RAUMREGLERS**

(30) Priorität: 25.11.2015 DE 102015120358
(71) Anmelder: Enervision GmbH, 52070 Aachen (DE)
(72) Erfinder: Möllering, Christian, 52249 Eschweiler (DE)
(74) Vertreter: Bauer, Dirk

(57) **Zusammenfassung**

Die Erfindung betrifft ein Verfahren zum Betrieb und/oder Bestimmung der geometrischen Position mindestens eines Raumreglers (5) zur Beeinflussung von Gebäudefunktionen, insbesondere zur Beeinflussung der Raumtemperatur, Luftfeuchtigkeit, Raumbeleuchtung und/oder Jalousienstellung, wobei der mindestens eine Raumregler (5) einem Bereich (2) zwischen zwei benachbarten Achsen (A1 bis A7) eines Gebäudes (1) mit einer Mehrzahl von Bereichen (2) zugeordnet ist. Um die Regelgüte zu verbessern und im Falle von Umbauten oder Umnutzungen von Bereichen (2) des Gebäudes (1) den programmiertechnischen Anpassungsaufwand zu reduzieren, sowie auch eine einfache geometrische Positionsbestimmung des Raumreglers (5) zu ermöglichen wird vorgeschlagen, dass der mindestens eine Raumregler (5) mit einem BIM-Modell des Gebäudes (1) kommuniziert.

## Beschreibung

Die Erfindung betrifft ein Verfahren zum Betrieb und/oder Bestimmung der geometrischen Position mindestens eines Raumreglers zur Beeinflussung von Gebäudefunktionen, insbesondere zur Beeinflussung der Raumtemperatur, Luftfeuchtigkeit, Raumbeleuchtung und/oder Jalousienstellung, wobei der mindestens eine Raumregler einem Bereich zwischen zwei benachbarten Achsen eines Gebäudes mit einer Mehrzahl von Bereichen zugeordnet ist.

### Gebiet der Erfindung

Größere Gebäude, insbesondere Verwaltungsgebäude mit Büros oder auch Hotels, werden typischerweise in so genannten "Achsen" geplant, wobei derartige Achsen gedachte Linien in einem Horizontalschnitt oder aber vertikale Ebenen darstellen, die zum einen parallel zueinander, zum anderen aber auch um 90° zueinander gedreht angeordnet sein können und auf diese Weise einerseits jedes einzelne Geschoss des Gebäudes, aber andererseits auch das Gebäude insgesamt rasterförmig bzw. matrixartig unterteilen. Meist definieren die Achsen Grenzen der bzw. der davon gebildeten Raumbegrenzungsflächen physischen Räume des Gebäudes, d.h. die Achsen entsprechen der Position der Raumbegrenzungselemente (Wände aus Mauerwerk, Beton, Leichtbau (Gips, Karton, u.ä.)). Dabei erstreckt sich aber meist nicht entlang jeder Achse des Gebäudes tatsächlich eine physische Raumbegrenzungsfläche, sondern es existieren häufig auch Räume, die sich, in eine Richtung betrachtet, über mehrere Achsen erstrecken (z.B. Großraumbüros, Besprechungsräume, o.ä.). Andererseits ist es aber auch möglich, dass sich zwischen zwei benachbarten Achsen auch zwei physische Räume befinden, die dann eine entsprechend geringe Größe besitzen, wobei dann eine physische Wand zwischen zwei Achsen angeordnet ist.

Meist ist jedem Bereich zwischen zwei benachbarten Achsen, typischerweise jeweils von einer Fassadenseite her betrachtet, ein derartiger Raumregler zugeordnet, der daher bisweilen auch als Achs-Raumregler oder Achsregler (auch: Raumcontroller, Achscontroller) bezeichnet wird.

Gebäudetechnische Anlagen und Einrichtungen sowie deren Komponenten (Heizungs-, Lüftungs- und Klimaanlagen, Jalousien, Beleuchtungseinrichtungen etc) kommunizieren meist über ein BUS-System miteinander, das eine große Freiheit bei der Verdrahtung bietet und auch bei dem späteren Betrieb des Gebäudes Änderungen in deren Funktionalität, insbesondere bauliche Veränderungen in der Raumaufteilung, allein durch Umprogrammieren möglich macht. Auch die vorstehend beschriebenen Raumregler sind in ein derartiges BUS-System eingebunden. Eine Verbindung der BUS-Teilnehmer erfolgt typischerweise über eine Verkabelung, die einen sternförmigen oder auch linearen Aufbau von einem Teilnehmer zum nächsten aufweisen kann.

Die vorstehend genannten Vorteile der relativen Einfachheit bei der Herstellung der Verkabelung der achsweise, d.h. rasterförmig, angeordneten Raumregler werden durch einen vergleichsweise großen Programmieraufwand sowohl bei der erstmaligen Konfiguration des Systems, d.h. der Einrichtung nach der BUS-Installation, d.h. vor der ersten Inbetriebnahme des Systems, aber auch mit einem hohen Aufwand bei späteren Änderungen des Gebäudes, beispielsweise im Zuge von Umbauten oder Umnutzungen, erkauft. In beiden Fällen ist eine nicht unerhebliche Programmierungsleistung zu erbringen. Insbesondere ist es wichtig, dass sowohl bei der Neu- als auch bei der Anpassungsprogrammierung (in Folge von Änderungen) sichergestellt wird, dass jeder Raumregler, der beispielsweise die Temperatur, die Helligkeit, den Luftsauerstoffgehalt und eventuell weitere Raumparameter misst, und in Verbindung mit eigener Regel-Hard- und Software die gemessenen Raumparameter regelt, so beispielsweise durch Ansteuerung lüftungstechnischer Komponenten (Durchflussmenge von Wärmetauschern, Betonkernaktivierungen, Leistungen von Gebläsen, Licht- und Jalousiensteuerung etc) dem "richtigen" Raum zugeordnet ist. Ein physisch beispielsweise in einem Raum mit der Nr. 2175 eines größeren Bürogebäudes zugeordneter, d.h. dort befindlicher Raumregler, muss bei der Konfiguration in der dem BUS-System zugrunde liegenden Software selbstverständlich auch als genau in diesem Raum Nr. 2175 befindlich abgebildet werden. Erfahrungsgemäß geschehen bei dieser Abbildung nicht selten Fehler z.B. in Form von Vertauschungen zweier Raumregler, die später zu einem nur schwer feststellbaren und meist eine intensive Suche erfordernden und für die Benutzer häufig nur schwer erklärlichen Fehlverhalten des Systems führen. Die Zuordnung der einzelnen Raumregler zu dem jeweiligen Raum, in dem sie sich befinden, erfolgt heute meist im Wege manueller Programmierung und zwar für jeden Raumregler einzeln im Zuge der individuellen BUS-Programmierung, d.h. Konfiguration.

Häufig sind die heutigen Raumregler zwar mit einer lernfähigen Software ausgestattet, d.h. der Raumregler lernt es im Laufe der Zeit, sein Regelverhalten auf die spezifischen Eigenschaften des ihm zugeordneten Bereichs bzw. Raums "anzupassen" d.h. zu optimieren. Bei diesen spezifischen Eigenschaften handelt es sich z.B. um die Größe einer verglasten Außenfläche eines Raumes, die dem Raum zugeordnete Fassadenfläche, die, gemessen von der Fassade her, "Tiefe" des Raums, d.h. seine Fläche, die bauphysikalischen Eigenschaften der Raumbegrenzungselemente, sowohl in Form der Außenwände als auch der Innenwände, die Orientierung der (verglasten) Fassadenflächen des Raums (Himmelsrichtungen). Gleichwohl dauert ein derartiger "Lernprozess" lange und es wird auf diesem Wege nicht immer eine vollständig zufrieden stellende Regelungsgüte erreicht. Jedenfalls ist das Ergebnis, das durch einen Lernprozess erreicht werden kann, schlechter, als wenn der Raumregler auf Informationen zurückgreifen könnte, die die realen (physikalischen, geographischen o.ä.) Eigenschaften des ihm zugeordneten Bereichs definieren.

Aus der US 2013/0338971 A1 ist ein Verfahren bekannt, bei dem Simulationen an und in Gebäuden mit Hilfe eines so genannten BIM-Modells durchgeführt werden sollen. Bei einem BIM-Modell handelt es sich um ein so genanntes "angereichertes Architekturmodell", das von allen an einem Projekt Beteiligten (Architekten, Ingenieure, Brandschutzfachleute, Baubehörden, Facility-Management-Fachleute) während der Planungs-, Bau- und Unterhaltungsphase eines Gebäudes genutzt wird. Nach der vorgenannten älteren Patentanmeldung sollen die Simulationen typischerweise in der Planungsphase unter Verwendung von im BIM-Modell vorhandenen Daten stattfinden, um deren Ergebnisse noch in die Planung und insbesondere Bauausführung einfließen lassen zu können. Bei den Simulationen kann es sich um Energiesimulationen, Beleuchtungssimulationen, Strömungssimulationen oder die Simulation von Schadstoffausbreitung handeln. Ein Zusammenwirken zwischen Raumreglern und dem BIM-Modell ist in der US 2013/0338971 A1 nicht vorgeschlagen.

Die US 2013/0275566 A1 offenbart eine Methode zur Konfigurierung mindestens eines Geräts in einem Ethernet-basierten Kommunikationsnetzwerk, in dem eine Mehrzahl von Ethernet-fähigen Geräten vorhanden sind. In einem ersten Schritt soll dabei die topologische Position eines ausgewählten Geräts bestimmt werden, das konfiguriert werden soll und dem ein bestimmter Gerätetyp als Merkmal zugewiesen werden soll. Anschließend sollen Konfigurationsdaten entsprechend dem zugewiesenen Gerätetyp und entsprechend der zuvor bestimmten topologischen Position von einer Datenbank auf das bestimmte Gerät übertragen werden, wobei die Datenbank eine Vielzahl von Konfigurationsdaten für die verschiedenen Gerätetypen und für unterschiedliche topologische Positionen von Geräten enthält. Schließlich wird das betreffende Gerät auf der Basis der zuvor von ihm übertragenen Konfigurationsdaten konfiguriert.

Sofern in einem Netzwerk an den Knotenpunkten die heute üblichen "smart switches" verwendet werden, ist die Ermittlung der topologischen Position eines Gerätes in einem Ethernet-Netzwerk ohne Schwierigkeiten möglich. Dies trifft allerdings nicht für die Ermittlung der geometrischen Position eines Geräts in einem Gebäude, was zur Reduzierung des Aufwandes bei der Einrichtung und Inbetriebnahme einer gebäudetechnischen Anlage mit Raumreglern wünschenswert wäre. Die in der älteren US-Anmeldung angesprochene Datenbank enthält ausdrückliche Konfigurationsparameter für die Raumregler. Dies ist bei einem BIM-Modell nicht der Fall. Vielmehr sind darin gebäudetechnische Informationen enthalten, die gerade nicht für den Betrieb eines Raumreglers bestimmt sind. Schließlich offenbart die In Rede stehende ältere US-Anmeldung auch nicht die Konfiguration von Raumreglern sondern allgemein die von "Geräten".

### Aufgabe

Der Erfindung liegt die Aufgabe zugrunde, die Güte der von einem Raumregler durchgeführten Regelung zu verbessern und/oder die geometrische Positionsbestimmung eines Raumreglers in dem Gebäude zu vereinfachen, ohne dass hierzu ein großer manueller Programmieraufwand betrieben werden muss und ohne dass die Gefahr von dabei auftretenden Programmierfehlern hervorgerufen wird.

### Lösung

Ausgehend von einem Verfahren der eingangs beschriebenen Art wird die zugrunde liegende Aufgabe dadurch gelöst, dass der mindestens eine Raumregler mit einem BIM-Modell des Gebäudes kommuniziert, d.h. mit diesem Daten oder Informationen austauscht und zwar entweder unidirektional, d.h. dass insbesondere ein Datenfluss von dem BIM-Modell zu dem Raumregler stattfindet, oder bidirektional, d.h. mit Datenfluss in beide Richtungen.

Der Begriff BIM (Building Information Modeling = Gebäudedatenmodellierung) beschreibt ein Verfahren der optimierten Planung, Ausführung und Bewirtschaftung von Gebäuden mit Hilfe von Software. Dabei werden alle relevanten Gebäudedaten digital erfasst, kombiniert und vernetzt. Das Gebäude ist als virtuelles Gebäudemodell auch geometrisch visualisierbar (Computermodell). Inzwischen werden BIM-Modelle sowohl im Bauwesen zur Bauplanung und Bauausführung (Architektur, Ingenieurwesen, Haustechnik) als auch im Facility-Management, d.h. im Bereich des späteren Bauunterhalts und der Gebäudewartung, angewendet. Während in der klassischen Bauplanung Gebäudeentwürfe von einem Architekten erstellt und gezeichnet werden, inzwischen meist mit Hilfe von CAD-Systemen, erfolgt dies nach der BIM-Methode durch den Architekten von Beginn an in einer Projektdatei, d.h. an einem Modell. Auf dieses Modell greift aber nicht nur der Architekt sondern auch andere an dem Projekt Beteiligte, insbesondere Fachplaner, Statiker, Gebäudetechniker, zu. Es kann auf diese Weise eine engere Verzahnung zwischen den unterschiedlichen Gewerken erreicht werden, da die Fachingenieure, Brandschutzgutachter oder -behören usw. zu einem früheren Zeitpunkt in das Projekt eingebunden werden können. Der Koordinierungsaufwand und somit auch der Arbeitsaufwand insgesamt kann durch die BIM-Methodik gegenüber konventionellen Bauplanungen deutlich reduziert werden. Treten beispielsweise Änderungen im Laufe des Projektes auf, so sind diese für alle Beteiligten sowohl als Zeichnung als auch als Datenpaket im BIM-Modell unmittelbar sichtbar und verfügbar. Massen und Stückzahlen, die beispielsweise als Grundlage zur Kostenkalkulation dienen, werden automatisch mit angepasst.

Die Vorteile der Verwendung von BIM-Modellen liegen somit in einer kontinuierlichen und unmittelbaren Verfügbarkeit der jeweils aktuellen und relevanten Daten für alle an einem Projekt Beteiligten sowie einem verbesserten und vereinfachten Informationsaustausch, da sämtliche Daten auf eine gemeinsame Datenbasis zurückgehen und ständig synchronisiert werden. Aufgrund einer kontinuierlichen Datenaufbereitung während des gesamten Lebenszyklus eines Gebäudes gelten diese Vorteile nicht nur in der Planungs- und Bauphase sondern auch bei dem späteren Management des Gebäudes sowie bei Umbauten und/oder Erweiterungen.

Im Sinne der vorliegenden Anmeldung soll unter BIM ein "dreidimensionaler, objektorientierter, AEC-spezifischer, computerunterstützter Designprozess" verstanden werden, wie er von dem Unternehmen Autodesk geprägt wurde. Vorzugsweise kann es sich dabei um ein so genanntes "parametrisiertes Gebäudemodell" handeln, bei dem sämtliche Elemente (Wände, Decken, Bemaßungen, Beschriftungen, Objekte, Schnittlinien, etc) zueinander in Abhängigkeiten gebracht werden.

Vorzugsweise soll das BIM-Modell auf dem Basisdatenmodell der so genannten "Industry Foundation Classes (IFC)" fußen, das von der internationalen Organisation buildingSMART als offener Standart (openBIM) für den modellbasierten Informationsaustausch und die Kommunikation im Bauwesen entwickelt hat.

Erfindungsgemäß werden die elektronischen Plandaten während der Planungs-, Bau- und späteren Betriebsphase des betreffenden Gebäudes über Datenfernverbindungen zwischen den am Prozess Beteiligten ausgetauscht. Dieser Austausch kann entweder über Store-and-Forward-Verfahren oder ein aktives Zusenden der Datenbestände abgewickelt werden. Da BIM-Dateien in ihrer Grundstruktur jedoch die Gesamtheit aller Teil- und Fachgebiete enthalten, werden diese Datenvolumina sehr umfangreich. Dies erschwert eine effiziente Übertragung der Gesamtheit aller Daten mit den heute zur Verfügung stehenden Mitteln. Stattdessen können die konsolidierten Datenbestände an zentraler Stelle, typischerweise auf einem Serverrechner, gemeinsam durch die Beteiligten bearbeitet werden, wodurch sich eine Übertragung der Gesamtheit aller Daten erübrigt. Das Speichern der Gesamtheit aller Daten kann beispielsweise in einer so genannten "Cloud" erfolgen, so dass der konkrete Speicherort oder eine Mehrzahl derartiger Speicherorte, an denen jeweils eine Teilmenge der Gesamtdaten vorhanden ist, irrelevant ist.

Gemäß einer Ausgestaltung des erfindungsgemäßen Verfahrens liest der mindestens eine Raumregler Informationen aus dem BIM-Modell aus und berücksichtigt diese während seines Betriebs, insbesondere bei der von ihm durchgeführten Beeinflussung von Gebäudefunktionen. Die von dem Raumregler ausgegebenen Informationen, d.h. insbesondere Steuerbefehle an die von ihm kontrollierten Peripheriegeräte, hängen somit vorzugsweise von dem von ihm selbst aus dem BIM-Modell ausgelesenen Informationen bzw. Daten ab.

Vorzugsweise werden die ausgelesenen Informationen in einen in dem Raumregler hinterlegten Regelalgorithmus integriert bzw. werden von diesem verarbeitet.

Die Kommunikation zwischen dem Raumregler und dem BIM-Modell kann automatisch und/oder manuell initiiert erfolgen.

Gemäß einer Weiterbildung der Erfindung beinhalten die von dem Raumregler aus dem BIM-Modell ausgelesenen Informationen folgendes:
a) Daten betreffend den geografischen Standort und/oder die Orientierung des Gebäudes, in dem sich der mindestens eine Raumregler befindet und/oder
b) Daten betreffend die räumlichen Umgebung des Raumreglers in dem Gebäude, insbesondere geometrische Daten zu Raumbegrenzungsflächen oder -elementen und/oder
c) Daten betreffend Eigenschaften von Raumbegrenzungsflächen oder -elementen, insbesondere deren Transmissionseigenschaften, Wärmedurchgangseigenschaften, o.ä. und/oder
d) Daten betreffend die Nutzung eines dem Raumregler zugeordneten Bereichs des Gebäudes und/oder
e) Daten betreffend die mögliche Existenz und/oder Position eines Raumreglers in einem Bereich des Gebäudes

Daten bezüglich des geographischen Standorts und/oder zur Orientierung des Gebäudes betreffen insbesondere den Längen- und Breitengrad des Gebäudestandorts sowie die Ausrichtung desselben und damit auch einzelner Räume bzw. Fassaden relativ zu den Himmelsrichtungen.

Daten betreffend die räumliche Umgebung des Raumreglers in dem Gebäude betreffen insbesondere Daten zu Maßen von Wänden, darin vorhandenen Durchbrüchen (verschließbar oder nicht verschließbar) sowie die Abstandsmaße der Wände zueinander. So ist ein "Raum" im Sinne des BIM-Modells nicht als solcher im Vorhinein definiert, sondern ein Raum lässt sich lediglich durch ein gedankliches Aneinanderfügen der ihn begrenzenden Flächen bzw. Elemente rechnerisch "zusammensetzen". So muss ein einem Bereich zugeordneter Raumregler erkennen können, welche Raumbegrenzungsflächen bzw. - elemente den ihm zugeordneten Bereich begrenzen und mit welchen Teilen bzw. Abschnitten diese Raumbegrenzungsflächen bzw. -elemente dies tun, da diese Elemente eine Begrenzungsfunktion häufig für eine Mehrzahl von Räumen bzw. "Bereichen" im Sinne der vorliegenden Anmeldung besitzen. So kann eine in der Sprache des BIM-Modells als ein Element definierte Wand eine Begrenzungsfunktion für zwei, drei oder mehr Räume bzw. Bereiche besitzen. So ermittelt der Raumregler aus dem BIM-Modell z.B. Daten wie "Grundfläche" des Raums bzw. des Bereichs, dem der Raumregler zugeordnet ist bzw. "Volumen" des Raums bzw. des Bereichs, dem der Raumregler zugeordnet ist.

Bei Daten betreffend die Nutzung eines dem Raumregler zugeordneten Bereichs des Gebäudes kann es sich beispielsweise um die Nutzung "Büro", "Besprechungsraum", "Lagerraum", "Pausenraum", "Teeküche" etc. handeln. Gemäß der vorliegenden Erfindung kann die Kommunikation zwischen dem mindestens eine Raumregler und dem BIM-Modell regelmäßig, d.h. wiederholt, insbesondere fortlaufend oder in gewissen zeitlichen Abständen, erfolgen, so dass Änderungen in dem BIM-Modell, insbesondere durch Umbauten und/oder Umnutzungen des dem Raumregler zugeordneten Bereichs im Gebäude von dem mindestens einen Raumregler festgestellt und diese Änderungen gegenüber den zuvor vorliegenden Informationen von dem mindestens einen Raumregler in dessen nachfolgenden Betrieb, d.h. bei der Ausübung seiner Regelfunktion, berücksichtigt werden.

Eine Zusatzfunktion des erfindungsgemäßen Verfahrens besteht darin, dass ein Raumregler durch Kommunikation mit dem BIM-Modell seine geometrische (und nicht bloß topologische, d.h. auf die Netzwerkstruktur bezogene) Position in dem Gebäude, d.h. seine Position relativ zu den anderen, insbesondere benachbarten und anderen Bereichen des Gebäudes zugeordneten Raumreglern, bestimmen kann. Hierdurch wird insbesondere bei der Ersteinrichtung des BUS-Systems mit seiner typischerweise sehr großen Anzahl von BUS-Teilnehmern der manuelle Programmieraufwand gegenüber dem Stand der Technik deutlich reduziert.

Vorzugsweise erfolgt eine Grobbestimmung von Daten betreffend die geometrische Position eines jeweiligen Raumreglers
- durch Verwendung von Topologiedaten eines sich in dem Gebäude erstreckenden Netzes aus einer Mehrzahl von Raumreglern und diese verbindenden Kommunikationsleitungen und/oder
- aus Messdaten eines Helligkeitssensors, der in dem dem jeweiligen Raumregler zugeordneten Bereich angeordnet ist, wobei die Messdaten vorzugsweise über einen hinreichend langen Zeitraum mindestens eines Tages erfasst werden, sodass eine Ermittlung des Sonnenstandsverlaufs möglich ist, und/oder
- aus Messdaten eines in dem jeweiligen Raumregler angeordneten Sensors zur Erfassung von Geopositionsdaten, insbesondere eines GPS-Sensors.

Eine derartige Grobbestimmung kann somit ohne Verwendung von Daten aus dem BIM-Modell erfolgen, so dass eine Kommunikation bzw. ein Datenaustausch mit dem BIM-Modell für diese (Teil-)Funktionalität nicht erforderlich ist. Im Anschluss an eine Grobbestimmung der geometrischen Position sollte sodann eine Feinbestimmung derselben erfolgen und zwar durch einen Abgleich von Positionsdaten der Grobbestimmung mit denen aus dem BIM-Modell ausgelesenen Informationen. Auf diese Weise ist eine exakte räumliche Zuordnung, d.h. ein Wiederfinden, eines Raumreglers in dem BIM-Modell möglich. Es handelt sich somit um eine sehr präzise Selbstlokalisation eines jeden Raumreglers in dem Gebäude, d.h. eine automatische Selbstkonfiguration des gesamten Netzwerks von Raumreglern. Erfindungsgemäß ist dabei sinnvoller Weise vorgesehen, dass alle Raumregler eines Gebäudes dasselbe Zeitsignal verwenden, d.h. zeitlich synchronisiert sind, was insbesondere bei der Verwendung von Daten von Helligkeitssensoren zur Bestimmung des Verlaufs des Sonnenstandes wichtig ist.

Typischerweise wird bei dem erfindungsgemäßen Verfahren auf eine spezielle Kommunikationssoftware, die eine Kommunikation zwischen einem Raumregler und dem BIM-Modell ermöglicht, zurückgegriffen. Diese Kommunikationssoftware kann entweder in dem Raumregler in einem dort vorhandenen Speichermedium oder auf einem Serverrechner gespeichert sein, der innerhalb oder außerhalb des Gebäudes angeordnet ist.

Die Daten des BIM-Modells selbst sind vorzugsweise auf einem Serverrechner gespeichert, der innerhalb oder außerhalb des Gebäudes angeordnet sein kann.

Eine Kommunikation zwischen dem mindestens einen Raumregler und dem BIM-Modell kann drahtlos oder kabelgebunden erfolgen, wobei auch Kombinationen der beiden Übertragungsarten möglich sind.

### Ausführungsbeispiel

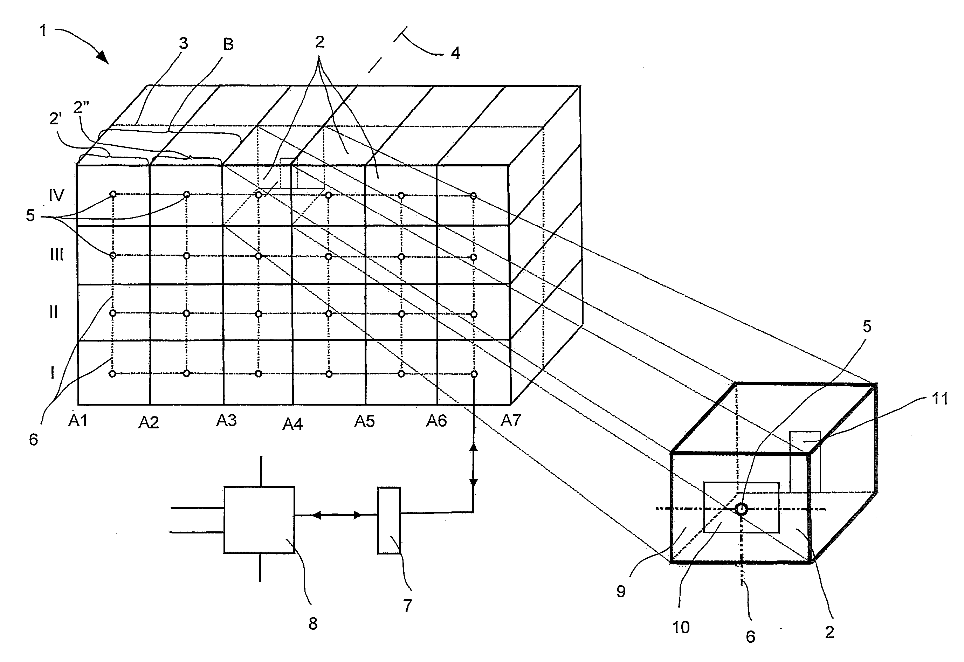

Das erfindungsgemäße Verfahren wird nachfolgend anhand eines in der Zeichnung schematisch dargestellten Gebäudes näher erläutert, das ein Kommunikationssystem umfassend Raumregler, Kommunikationsleitungen sowie einen Serverrechner umfasst.

Ein Gebäude 1 weist vier Geschosse I, II, III, IV auf und ist in jedem Geschoss I, II, III, IV mit einer Mehrzahl von Bereichen 2 versehen. Bis auf einen Sonderfall entsprechen die Bereiche 2 einzelnen, physisch voneinander getrennten "Räumen" im klassischen Sinn. Das Gebäude 1 weist des Weiteren in Richtung seiner horizontalen Längsachse 3 betrachtet 5 zueinander parallele Achsen A1, A2, A3, A4, A5, A6 und A7 auf. Auch in Richtung einer horizontalen Querachse 4 ist eine derartige Einteilung denkbar, aber im Ausführungsbeispiel nicht weiter vorgenommen.

Die meisten Bereiche 2 erstrecken sich auf dem jeweiligen Geschoss I bis IV zwischen zwei benachbarten Achsen A1 bis A7, wobei die Achsen A1 bis A7 in diesem Fall mit Wänden, die die benachbarten Räume voneinander trennen, zusammenfallen. Bei dem Raum B handelt es sich um einen auf dem Geschoss IV befindlichen großen Besprechungsraum (Mehrachsraum), der sich zwischen den Achsen A1 und A3 erstreckt. In ihm befinden sich zwei Raumregler 5, die zum einen dem Bereich 2' (zwischen den Achsen A1 und A2) und zum anderen dem Bereich 2" (zwischen den Achsen A2 und A3) zugeordnet sind, wohingegen sich in den übrigen Bereichen 2 jeweils nur ein Raumregler 5 befindet.

Im Folgenden soll exemplarisch der Bereich 2 betrachtet werden, der im Geschoss IV zwischen den Achsen A3 und A4 angeordnet ist. Dieser, einen physisch abgeschlossenen Raum bildende Bereich 2 ist in der unteren rechten Hälfte der Zeichnungsfigur gedanklich herausgezogen und vergrößert dargestellt.

In dem besagten Bereich 2 befindet sich - wie in sämtlichen anderen Bereichen 2 des Gebäudes 1 auch - ein Raumregler 5, der diesem Bereich 2 zugeordnet ist. Der Raumregler 5 ist zur Beeinflussung der Raumtemperatur, Luftfeuchtigkeit, Raumbeleuchtung, Jalousienstellung etc. in dem zugeordneten Bereich 2 verantwortlich. Der Raumregler 5 und auch alle übrigen Raumregler 5 in dem Gebäude 1 kommunizieren daher über ein Netz von Kommunikationsleitungen 6 mit einer Gebäudeleittechnik und den Einrichtungen der so genannten technischen Gebäudeausstattung (TGA). Hierbei handelt es sich z.B. um Gebläse, Antriebe, Volumenstromsteller, Umwälzpumpen, Ventile für Heiz- bzw. Kühlkreisläufe, Beleuchtungsaktoren, Antriebe für Jalousien usw. Im vorliegenden Fall sind die Raumregler 5 in ein rasterförmiges Netz der Kommunikationsleitungen eingebunden. Somit steht jeder Raumregler 5 mit den benachbarten Raumreglern 5 auf demselben Geschoss I bis IV sowie - auf unterschiedlichen Geschossen - zwischen denselben Achsen Aₙ und Aₙ₊₁ in direkter Verbindung über jeweils ein Kabel. Sämtliche Raumregler 5 sind somit über ein Bus-System untereinander und mit der Gebäudeleittechnik verknüpft. Die Kommunikation in dem die Raumregler 5 enthaltenden Netze erfolgt seriell.

An das Bus-System angeschlossen ist eine in dem Gebäude 1 angeordnete Datenübertragungseinrichtung 7, über die eine Verbindung zu einem Serverrechner 8 hergestellt werden kann. Bei der Datenübertragungseinrichtung 7 kann es sich beispielsweise um einen Router handeln, der über das Internet eine Verbindung zu dem an einem anderen beliebigen Standort befindlichen Serverrechner 8 herstellt. Auf dem Serverrechner 8 ist die Gesamtheit aller das Gebäude 1 betreffenden Daten eines BIM-Modells gespeichert. Über die Datenübertragungseinrichtung 7 und deren Verbindung zu dem gebäudeinternen Bus-System haben somit sämtliche Raumregler 5 Zugriff auf die Daten aus dem BIM-Modell. Die Kommunikation zwischen dem BIM-Modell und jedem einzelnen Raumregler 5 erfolgt bidirektional.

Aus dem BIM-Modell entnimmt der dem exemplarisch vergrößert dargestellten Bereich 2 zugeordnete Raumregler 5 beispielsweise Daten betreffend die Geometrie und Materialität der einzelnen, den Bereich 2 umschließenden Raumbegrenzungselemente 9 (Wände). So erhält der Raumregler 5 beispielsweise eine Information darüber, dass sich in der fassadenseitigen Wand ein Fenster 10 und in einer der Längsachse 3 des Gebäudes 1 zugewandten Wand eine Tür 11 befindet. Auch die Position und die Abmessungen des Fensters und der Tür sind dem Raumregler 5 bekannt. Darüber hinaus erhält der Raumregler 5 aus dem BIM-Modell auch die Information, dass der betreffende Bereich 2 als klassisches Zwei-Personen-Büro genutzt wird.

Bei der erstmaligen Konfiguration des Raumreglersystems lässt sich durch Nutzung der in dem BIM-Modell hinterlegten Daten eine automatische geometrische Selbstlokalisation aller in dem Gebäude 1 befindlichen Raumregler 5 erreichen. Hierzu erfolgt in einem ersten Schritt eine geometrische Grobbestimmung der Position jedes Raumreglers 5 durch entweder die direkte Ermittlung von Geopositionsdaten jedes einzelnen Raumreglers 5 (mit Hilfe eines darin integrierten hochempfindlichen Geopositionsdaten-Sensors) oder z.B. durch Erfassung von Helligkeitswerten jeweils eines in jedem Raumregler 5 integrierten Helligkeitssensors. Durch Vergleich der unterschiedlichen Verläufe der zeitlichen Helligkeitsfunktionen lässt sich beispielsweise die Ausrichtung der in den einzelnen Bereichen 2 befindlichen Glasflächen und damit eine grobe Zuordnung der einzelnen Raumregler 5 zu einer Nord-, Ost-, Süd-, oder Westseite des Gebäudes 1 ermöglichen. Die Feinbestimmung der geometrischen Position erfolgt sodann durch eine Interaktion mit dem BIM-Modell, d.h. einen Abgleich der Grobdaten mit beispielsweise geometrischen Daten oder Materialdaten aus dem BIM-Modell. Im Ergebnis ist somit eine automatisierte und sehr genaue geometrische Lokalisation aller Raumregler 5 in dem Gebäude 1 möglich, wodurch sich der Inbetriebnahmeaufwand erheblich reduziert.

Aufgrund der aus dem BIM-Modell erhaltenen Informationen verbessert sich während des eigentlichen Betriebs des Raumreglers 5 dessen Regelungsgüte im Vergleich zu einer Situation, in der der Raumregler 5 gerade nicht über diese Informationen verfügt. Der Informationsaustausch zwischen den jeweiligen Raumreglern 5 und dem BIM-Modell erfolgt automatisch. Jeder einzelne Raumregler 5 enthält zu diesem Zweck ein spezielles Softwaremodul, das die Kommunikation zwischen ihm und dem BIM-Modell ermöglicht und steuert und das die BIM-Daten auf eine Weise filtert und interpretiert, wie sie zur Erfüllung der Regelungsaufgabe des Raumreglers 5 wichtig und förderlich sind.

Findet in dem Gebäude 1 beispielsweise ein Umbau und eine anschließende Umnutzung des exemplarisch näher erläuterten Bereichs 2 dergestalt statt, dass auch der benachbarte Bereich 2 zwischen den Achsen A4 und A5 auf dem Geschoss IV mit hinzugezogen wird, so dass ein entsprechend vergrößerter Bereich 2* gebildet wird, so würde dies in einem ersten Schritt in dem BIM-Modell von zuständigen Architekten und Haustechnikingenieuren geplant und entsprechend umgesetzt. Nach Fertigstellung des Umbaus und vor Beginn der erneuten Nutzungsaufnahme würde der Raumregler 5 über seine Kommunikation mit dem BIM-Modell von den neuen Gegebenheiten Kenntnis erlangen. Auch würde der dem Bereich 2 zwischen den Achsen A4 und A5 im Geschoss IV befindliche benachbarte Raumregler 5 wissen, dass er mit seinem "Nachbarn" nunmehr gemeinsam für einen vergrößerten "Raum" zuständig ist. Einer der beiden Raumregler 5 könnte in diesem Fall als Master, der andere ans Slave fungieren, um ein Gegeneinander-Arbeiten der beiden Raumregler 5 zu vermeiden.

### Bezugszeichenliste

- 1: Gebäude
- 2, 2', 2": Bereich
- 3: Längsachse
- 4: Querachse
- 5: Raumregler
- 6: Kommunikationsleitung
- 7: Datenübertragungseinrichtung
- 8: Serverrechner
- 9: Raumbegrenzungselement
- 10: Fenster
- 11: Tür
- A1, A2, A3, A4, A5, A6, A7: Achse
- B: Raum
- I, II, III, IV: Geschoss

## Patentansprüche

1. Verfahren zum Betrieb und/oder Bestimmung der geometrischen Position mindestens eines Raumreglers (5) zur Beeinflussung von Gebäudefunktionen, insbesondere zur Beeinflussung der Raumtemperatur, Luftfeuchtigkeit, Raumbeleuchtung und/oder Jalousienstellung, wobei der mindestens eine Raumregler (5) einem Bereich (2) zwischen zwei benachbarten Achsen (A1 bis A7) eines Gebäudes (1) mit einer Mehrzahl von Bereichen (2) zugeordnet ist, **dadurch gekennzeichnet, dass** der mindestens eine Raumregler (5) mit einem BIM-Modell des Gebäudes (1) kommuniziert.

2. Verfahren nach Anspruch 1, **dadurch gekennzeichnet, dass** der mindestens eine Raumregler (5) Informationen aus dem BIM-Modell ausliest und während seines Betriebs, insbesondere bei der Beeinflussung von Gebäudefunktionen, die ausgelesenen Informationen berücksichtigt.

3. Verfahren nach Anspruch 2, **dadurch gekennzeichnet, dass** die ausgelesenen Informationen in einen in dem Raumregler (5) hinterlegten Regelalgorithmus integriert und/oder verarbeitet werden.

4. Verfahren nach einem der Ansprüche 1 bis 3, **dadurch gekennzeichnet, dass** die Kommunikation zwischen dem Raumregler (5) und dem BIM-Modell automatisch und/oder manuell initiiert erfolgt.

5. Verfahren nach einem der Ansprüche 1 bis 4, **dadurch gekennzeichnet, dass** die von dem Raumregler (5) aus dem BIM-Modell ausgelesenen Informationen folgendes beinhalten:
a) Daten betreffend den geografischen Standort und/oder die Orientierung des Gebäudes (1), in dem sich der mindestens eine Raumregler (5) befindet und/oder
b) Daten betreffend die räumlichen Umgebung des Raumreglers (5) in dem Gebäude (1), insbesondere geometrische Daten zu Raumbegrenzungsflächen oder -elementen (9) und/oder
c) Daten betreffend Eigenschaften von Raumbegrenzungsflächen oder -elementen (9), insbesondere deren Transmissionseigenschaften, Wärmedurchgangseigenschaften, o.ä. und/oder
d) Daten betreffend die Nutzung eines dem Raumregler (5) zugeordneten Bereichs (2) des Gebäudes (1) und/oder
e) Daten betreffend die mögliche Existenz und/oder Position eines Raumreglers (5) in einem Bereich (2) des Gebäudes (1).

6. Verfahren nach einem der Ansprüche 1 bis 5, **dadurch gekennzeichnet, dass** die Kommunikation zwischen dem mindestens einen Raumregler (5) und dem BIM-Modell regelmäßig und/oder wiederholt, insbesondere fortlaufend oder in zeitlichen Abständen, erfolgt, so dass Änderungen in dem BIM-Modell, insbesondere durch Umbauten und/oder Umnutzungen des dem Raumregler (5) zugeordneten Bereichs (2) in dem Gebäude (1) von dem mindestens einen Raumregler (5) festgestellt und Änderungen gegenüber bisherigen Informationen von dem mindestens einen Raumregler (5) berücksichtigt werden.

7. Verfahren nach einem der Ansprüche 1 bis 6, **dadurch gekennzeichnet, dass** ein Raumregler (5) durch Kommunikation mit dem BIM-Modell seine geometrische Position in dem Gebäude (1), insbesondere seine Position relativ zu den anderen, insbesondere benachbarten und anderen Bereichen (2) des Gebäudes (1) zugeordneten Raumreglern (5), bestimmt.

8. Verfahren nach Anspruch 7, **dadurch gekennzeichnet, dass** eine Grobbestimmung von Daten betreffend die geometrische Position eines jeweiligen Raumreglers (5)
- durch Verwendung von Topologiedaten eines sich in dem Gebäude erstreckenden Netzes aus einer Mehrzahl von Raumreglern (5) und diese verbindenden Kommunikationsleitungen und/oder
- aus Messdaten eines Helligkeitssensors, der in dem dem jeweiligen Raumregler (5) zugeordneten Bereich (2) angeordnet ist, wobei die Messdaten vorzugsweise über einen hinreichend langen Zeitraum eines Tages erfasst werden, so dass eine Ermittlung des Sonnenstandverfahrens möglich ist und/oder
- aus Messdaten eines in dem jeweiligen Raumregler (5) angeordneten Sensors zur Erfassung von Geopositionsdaten
erfolgt

9. Verfahren nach Anspruch 8, **dadurch gekennzeichnet, dass** eine Feinbestimmung der geometrischen Position eines jeweiligen Raumreglers (5) durch einen Abgleich von Positionsdaten der Grobbestimmung mit aus dem BIM-Modell ausgelesenen Informationen erfolgt.

10. Verfahren nach einem der Ansprüche 1 bis 9, **dadurch gekennzeichnet, dass** alle Raumregler (5) eines Gebäudes dasselbe Zeitsignal verwenden.

11. Verfahren nach einem der Ansprüche 1 bis 10, **dadurch gekennzeichnet, dass** eine Kommunikationssoftware, die eine Kommunikation zwischen einem Raumregler (5) und dem BIM-Modell ermöglicht, in dem Raumregler (5) oder auf einem Serverrechner (8) gespeichert ist, der innerhalb oder außerhalb des Gebäudes (1) angeordnet ist.

12. Verfahren nach einem der Ansprüche 1 bis 11, **dadurch gekennzeichnet, dass** Daten des BIM-Modells auf einem Serverrechner (8) gespeichert sind, der innerhalb oder außerhalb des Gebäudes (1) angeordnet ist.

13. Verfahren nach einem der Ansprüche 1 bis 12, **dadurch gekennzeichnet, dass** eine Kommunikation zwischen dem mindestens einen Raumregler (5) und dem BIM-Modell drahtlos und/oder kabelgebunden erfolgt.
